# FASCICULE DE BREVET EUROPEEN

(11) **EP 2 123 498 B1**
(45) Date de publication et mention de la délivrance du brevet: **31.10.2012**
(21) Numéro de dépôt: 09160383.7
(22) Date de dépôt: 15.05.2009
(51) Int. Cl.: B60K 6/52, B60K 6/387, B60W 20/00, B60W 10/02, B60W 10/08

(54) **Dispositif de traction électrique pour véhicule hybride**
Elektrische Antriebsvorrichtung für Hybridfahrzeug
Electric traction device for hybrid vehicle

(30) Priorité: 23.05.2008 FR 0853366
(43) Date de publication de la demande: 25.11.2009
(73) Titulaire: Peugeot Citroën Automobiles SA, 78140 Vélizy-Villacoublay (FR)
(72) Inventeur: Renault, Aurélien, 78990 Elancourt (FR)

(56) Documents cités:
- EP-A- 1 142 743
- EP-A- 1 400 386
- FR-A- 2 693 527
- US-A- 6 008 606
- US-A1- 2004 147 366
- US-B1- 6 321 865

## Description

La présente invention concerne un dispositif de traction électrique utilisé pour l'entraînement d'un véhicule hybride.

Les véhicules hybrides comportent généralement une machine électrique reliée à un accumulateur électrique, qui est associée au fonctionnement d'un moteur thermique pour optimiser le rendement de ce moteur.

Suivant les demandes du conducteur et les conditions de circulation, on peut associer un fonctionnement des deux motorisations pour notamment apporter avec la machine électrique un complément de couple moteur, recharger les batteries au freinage du véhicule en délivrant un couple de freinage, ou rouler uniquement avec le moteur électrique sans émettre de gaz polluants.

On peut ainsi optimiser le fonctionnement du moteur thermique, et réduire la consommation de carburant ainsi que les émissions de gaz polluants.

Un type connu de véhicule hybride présenté notamment dans le document FR-A1-2723553, comporte un moteur thermique placé à l'avant du véhicule et entraînant les roues avant, ainsi qu'une machine électrique placée longitudinalement entre les essieux avant et arrière du véhicule, entraînant directement par un différentiel suivant un rapport de démultiplication constant, le pont arrière du véhicule.

Cette disposition permet de réaliser une transmission simple, reprenant un pont du type de ceux couramment utilisés pour les véhicules avec roues arrière motrices.

Pour ce type de véhicule, on peut à partir d'une certaine vitesse du véhicule couper l'alimentation de la machine électrique, qui ne délivre ainsi plus de couple significatif aux vitesses de rotation élevées. Cependant, la machine électrique est toujours entraînée de manière mécanique par les roues du véhicule.

Seulement le fonctionnement de la machine électrique n'est pas optimisé. En effet, pour pouvoir rouler avec le véhicule à des vitesses élevées, il est nécessaire de prévoir une démultiplication de la transmission de la machine électrique de manière à ce que cette machine puisse supporter les vitesses de rotation importantes correspondantes. Il faut donc une démultiplication pas trop élevée du rapport de démultiplication.

Par conséquence, le couple moteur que peut délivrer la machine électrique sur les roues du véhicule, notamment au démarrage du véhicule et aux basses vitesses, est donc peu multiplié par le rapport de la transmission.

Or il peut être intéressant de disposer d'un couple aux roues élevé pour le démarrage du véhicule, comprenant un appoint de couple important fourni par la machine électrique, en particulier dans des conditions difficiles comme un démarrage dans une montée.

Il faut donc utiliser une machine électrique d'une taille suffisamment importante, avec une alimentation électrique pouvant délivrer des courants assez forts pour l'alimenter, afin de délivrer un couple élevé. Cet ensemble est encombrant, lourd et onéreux.

Le document US 6 321 865 B1 divulgue un dispositif ayant les caractéristiques énoncées dans le préambule de la revendication 1.

La présente invention a notamment pour but d'éviter ces inconvénients de la technique antérieure, et de proposer une machine électrique d'un véhicule hybride équipé d'une transmission, permettant de manière simple et efficace de délivrer un couple important aux basses vitesses.

Elle propose à cet effet un dispositif de traction électrique pour véhicule hybride selon la revendication 1.

Un avantage essentiel de ce dispositif de traction électrique est qu'en prévoyant un rapport de démultiplication suffisamment élevé, et en découplant la machine électrique des roues à partir d'une certaine vitesse du véhicule, on peut délivrer un couple important aux basses vitesses du véhicule à partir d'un machine électrique de taille réduite, sans risquer de la faire tourner trop vite aux vitesses élevées de ce véhicule.

D'autres caractéristiques de l'invention sont énoncées dans les revendications dépendantes.

L'invention comprend de plus un procédé de pilotage d'un véhicule hybride selon la revendication 5.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un diagramme présentant la demande de couple appliqué aux roues par une machine électrique, en fonction de leur vitesse de rotation ;
- la figure 2 est un diagramme présentant le couple correspondant qui doit être délivré par une machine électrique suivant l'art antérieur, en fonction de sa vitesse de rotation ;
- la figure 3 présente de manière schématique une machine électrique d'un dispositif de traction suivant l'invention, entraînant un essieu par une transmission ;
- la figure 4 présente en coupe axiale une vue détaillée d'une transmission d'un dispositif de traction suivant l'invention, réalisé selon une variante ; et
- la figure 5 est un diagramme présentant le couple délivré par une machine électrique d'un dispositif de traction suivant l'invention.

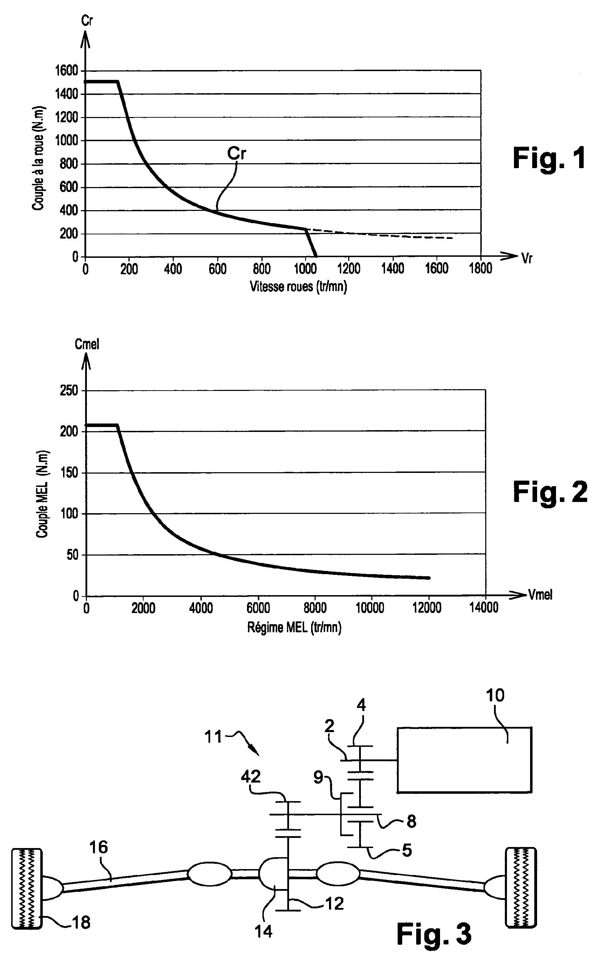

La figure 1 représente sur un diagramme la demande de couple Cr en mN délivré par une machine électrique d'un véhicule hybride, appliqué sur les roues du véhicule en fonction de leur vitesse de rotation Vr en tr/mn. Ce couple Cr vient en complément d'un couple délivré par le moteur thermique, pour optimiser le fonctionnement de ce moteur.

On souhaite aux basses vitesses du véhicule, pour une vitesse de rotation de la roue inférieure à 200 tr/mn, soit une vitesse du véhicule inférieure à 25 km/h environ, appliquer un couple de l'ordre de 1500 mN qui permet de décoller un véhicule à l'arrêt et de rouler à ces faibles vitesses, même sur une pente.

Ensuite à partir de cette vitesse de 25 km/h, on souhaite obtenir un couple qui descende d'abord rapidement, puis moins vite pour tendre vers un couple nul aux grandes vitesses du véhicule.

Pour une vitesse de rotation des roues de 1000 tr/mn, soit une vitesse du véhicule d'environ 120 km/h, la demande de couple aux roues descend à environ 220 mN. Au delà de cette vitesse, le couple du moteur thermique seul est suffisant, on ne demande plus de couple délivré par la machine électrique.

La figure 2 représente sur un diagramme un couple Cmel en mN en fonction de sa vitesse de rotation Vmel en tr/mn, délivré par une machine électrique d'un dispositif de traction électrique suivant l'art antérieur, et correspondant à la demande ci-dessus.

On considère une machine électrique dont la vitesse maximum est limitée par construction à 12000 tr/mn, ce qui impose un rapport de démultiplication de la transmission entre cette machine et les roues de 7,2 pour pouvoir atteindre la vitesse maximale du véhicule correspondant à une vitesse des roues de 1670 tr/mn.

La courbe du couple Cmel délivré par la machine électrique reste proportionnelle à celle Cr du couple appliqué sur les roues, suivant un rapport constant. Pour obtenir le couple demandé aux basses vitesses, il faut alors que cette machine électrique délivre un couple de 208 mN.

On notera que la courbe Cmel décroissante est sensiblement inversement proportionnelle à sa vitesse de rotation Vmel, ce qui correspond à une puissance délivrée sensiblement constante correspondant à sa puissance maximale.

Les deux impératifs de couple élevé aux basses vitesses de rotation et de vitesse de rotation maximale élevée, sont difficilement réalisables sur une même machine électrique d'un véhicule hybride. Le couple élevé de la machine électrique nécessite un dimensionnement important de cette machine ainsi que de l'installation électrique devant l'alimenter.

La figure 3 présente une machine électrique 10 disposée parallèlement à l'essieu d'un véhicule, entraînant par une transmission 11 comprenant un rapport de démultiplication unique, une couronne dentée 12 liée à un différentiel 14. Ce différentiel 14 répartit le mouvement en entraînant deux roues motrices 18 par des arbres de roues 16.

La machine électrique 10 comprend un arbre 2 comportant un pignon fixe 4, entraînant par engrènement suivant un rapport de démultiplication donné, un pignon 5 monté libre en rotation sur un arbre parallèle intermédiaire 8.

Un manchon de crabotage 9 placé sur le côté de ce pignon libre 5, coulisse axialement pour atteindre deux positions d'extrémité correspondant pour une première position éloignée du pignon libre 5, à un point mort, et pour une deuxième position rapprochée de ce pignon, à un crabotage avec l'arbre intermédiaire 8. L'arbre intermédiaire entraîne à son tour par un pignon de sortie 42 la couronne dentée 12.

Dans cette variante, la machine électrique 10 se trouve latéralement déportée par rapport à l'axe du différentiel 14.

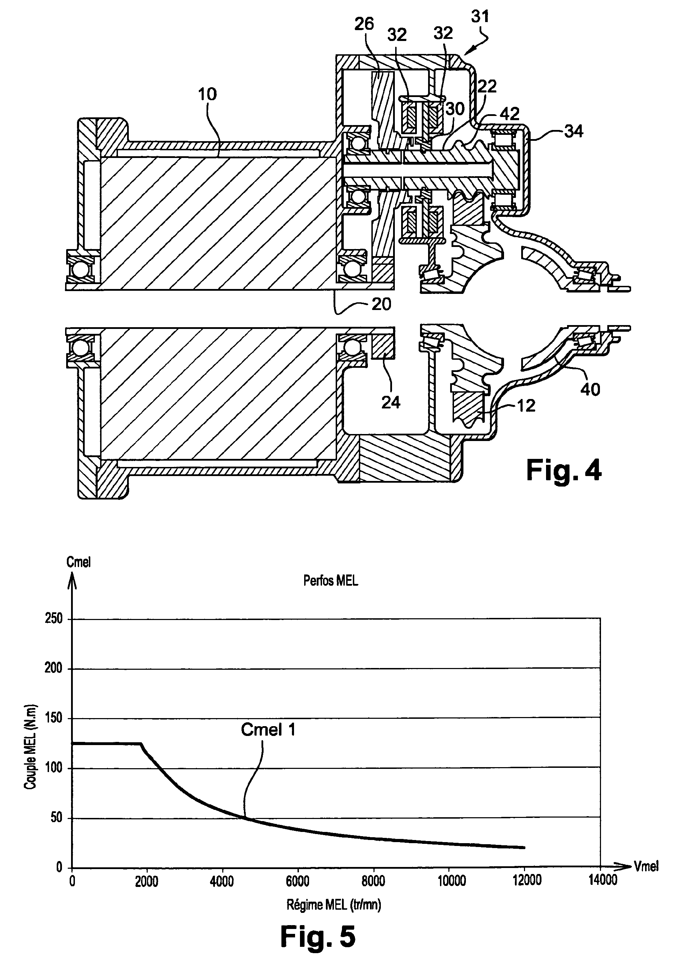

La figure 4 détaille une machine électrique 10 fixée sur un carter 34 comportant une transmission 31, cette machine électrique comportant un arbre creux 20 supporté par deux roulements, comprenant à son extrémité un pignon fixe 24 qui forme un engrenage avec un pignon 26 monté libre en rotation sur un arbre parallèle intermédiaire 22.

Le pignon libre 26 peut être rendu solidaire de son arbre intermédiaire 22, par un dispositif de couplage comprenant un manchon de crabotage 30, comportant un disque externe métallique encadré axialement par deux bobines électriques 32 d'un électro-aimant, pilotées par un calculateur de contrôle de la transmission.

En alimentant en courant l'une ou l'autre des bobines électriques 32, on créé un champ magnétique qui attire axialement le disque métallique du manchon de crabotage 30 dans une position d'extrémité ou une autre, correspondant à un point mort ou à un crabotage avec l'arbre intermédiaire 22.

L'arbre intermédiaire entraîne à son tour par un pignon de sortie 42 la couronne dentée 12 portée par un boîtier 40 du différentiel guidé dans le carter 34 par deux roulements, et disposé sur le même axe que l'arbre 20 de la machine électrique 10.

Le différentiel entraîne par des pignons non représentés placés dans son boîtier 40, un arbre de roue sortant d'un côté de la transmission 31 directement hors du carter 34, et un autre arbre de roue sortant de l'autre côté en traversant l'arbre creux 20 de la machine électrique 10, pour déboucher axialement de l'autre côté de cette machine.

On obtient ainsi une transmission 31 offrant deux possibilités, un entraînement de l'essieu par la machine électrique 10 suivant un rapport de démultiplication constant, ou un point mort où la machine électrique se trouve découplée des roues 18 du véhicule.

On réalise ainsi une transmission compacte proposant un rapport de transmission fixe ainsi qu'un point mort, dont la machine électrique peut être disposée entre les deux roues entraînées, avec un axe disposé suivant l'axe des arbres de roues.

La figure 5 représente sur un diagramme le couple suffisant Cmel1 en mN, que doit délivrer la machine électrique 10 pour répondre à la demande présentée figure 1, cette machine électrique pouvant être utilisée sur toute sa plage de vitesse, soit jusqu'à 12000 tr/mn.

La démultiplication de la transmission 31 est plus élevée que celle de l'art antérieur, comportant un rapport de 12 au lieu de 7,2, ce qui représente un facteur multiplicatif de 1,66. Le couple maximum Cmel1 nécessaire pour les faibles vitesses de rotation est de l'ordre de 125 mN ce qui représente une forte diminution de ce couple par rapport à l'art antérieur, suivant un facteur inférieur au deux tiers qui est dans cet exemple de 0,6. La taille de la machine électrique ainsi que de l'installation électrique qui l'alimente, est fortement diminuée.

Le fonctionnement du dispositif de traction suivant l'invention est le suivant. Pour les vitesses faibles et moyennes du véhicule, on peut laisser la machine électrique 10 reliée aux roues 18 du véhicule, pour délivrer un couple moteur ou travailler en génératrice de courant délivrant un couple de freinage.

A partir d'une certaine vitesse du véhicule correspondant dans cet exemple à 1000 tr/mn pour la vitesse des roues, soit 120 km/h pour le véhicule, la machine électrique 10 est systématiquement découplée des roues motrice 18 en passant au point mort pour permettre des vitesses élevées du véhicule sans faire tourner cette machine au-delà de sa vitesse maximale, et risquer de la détériorer par une vitesse centrifuge élevée.

De plus ce découplage de la machine électrique aux vitesses élevées, permet de réduire les frottements et l'inertie, et donc les pertes dues à l'entraînement de cette machine.

Pour la synchronisation de la vitesse de la machine électrique avant un engagement du rapport de démultiplication lors du roulage, on peut le faire sans utiliser de dispositif de synchronisation par friction, comprenant par exemple des cônes de frottement intégrés dans le manchon de passage. On pilote directement la vitesse de cette machine par le calculateur de contrôle de la transmission, pour l'ajuster suivant la vitesse cible à atteindre avant d'engager le rapport de démultiplication.

L'engagement du rapport de démultiplication peut se faire avec l'actionneur électromagnétique présenté, ou avec un type d'actionneur connu comprenant par exemple une commande électrique, hydraulique ou pneumatique, piloté par le calculateur de contrôle de la transmission.

## Revendications

1. Dispositif de traction électrique pour véhicule hybride comportant un moteur thermique entraînant des roues motrices par une première transmission, ce dispositif de traction électrique comprenant une machine électrique (10) entraînant des roues du véhicule (18) par une deuxième transmission (11, 31) indépendante de la première, suivant un rapport de démultiplication unique, dans lequel cette deuxième transmission (11, 31) comporte un dispositif de découplage de l'entraînement dont le rapport de démultiplication est tel que la vitesse maximale admissible de rotation de la machine électrique correspond à une vitesse de moins des deux tiers de la vitesse maximale du véhicule, dans lequel la synchronisation de la vitesse de la machine électrique (10) préalable à l'engagement du rapport de démultiplication, est accomplie par une commande électrique de la vitesse de rotation de cette machine, sans utiliser de dispositif de synchronisation par frottement, **caractérisé en ce que** le rapport de démultiplication est engagé par le coulissement axial d'un manchon de crabotage (9, 30), qui solidarise un pignon libre en rotation (5, 26) avec un deuxième arbre le supportant (8, 22), ce pignon libre formant un engrenage avec un pignon (4, 24) fixé sur un premier arbre parallèle (2, 20) et **en ce que** le premier arbre (2, 20) est disposé suivant l'axe de la machine électrique (10), le deuxième arbre (8, 22) comportant un pignon de sortie (42) qui engrène avec une couronne (12) fixée au boîtier d'un différentiel (14, 40).

2. Dispositif de traction suivant la revendication 1, **caractérisé en ce que** le manchon de crabotage (30) est actionné directement par des électroaimants (32) pilotés par un calculateur de contrôle de la transmission.

3. Dispositif de traction suivant l'une quelconque des revendications précédentes, **caractérisé en ce que** la transmission (31) comprend un différentiel (40) disposé suivant l'axe de la machine électrique (10) dont l'arbre (20) comporte un creux longitudinal traversé par un arbre de roue entraîné par ce différentiel.

4. Dispositif de traction suivant la revendication 1 ou 2, **caractérisé en ce que** la transmission (31) comporte un différentiel (40) dont l'axe est latéralement décalé par rapport à l'arbre (2) de la machine électrique (10).

5. Procédé de pilotage d'un véhicule hybride comportant un dispositif de traction électrique suivant l'une quelconque des revendications précédentes, **caractérisé en ce qu'**à partir de la vitesse du véhicule correspondant à la vitesse maximale de rotation de la machine électrique (10), la transmission (11, 31) passe systématiquement au point mort.

## Claims

1. An electric traction device for a hybrid vehicle comprising a heat engine driving drive wheels by a first transmission, this electric traction device including an electric machine (10) driving vehicle wheels (18) by a second transmission (11, 31) independent of the first, according to a single demultiplication ratio in which this second transmission (11, 31) comprises a driving decoupling device, the demultiplication ratio of which is such that the maximum admissible rotation speed of the electric machine corresponds to a speed of less than two thirds of the maximum speed of the vehicle, in which the synchronization of the speed of the electric machine (10) prior to the engagement of the demultiplication ratio is accomplished by an electrical control of the rotation speed of this machine, without using a friction synchronization device, **characterized in that** the demultiplication ratio is engaged by the axial sliding of a clutch sleeve (9, 30), which integrates a free rotation pinion (5, 26) with a second shaft (8, 22) supporting it, this free pinion forming a gearing with a pinion (4, 24) fixed on a first parallel shaft (2, 20) and **in that** the first shaft (2, 20) is arranged along the axis of the electric machine (10), the second shaft (8, 22) comprising an output pinion (42) which meshes with a crown (12) fixed to the housing of a differential (14, 40).

2. The traction device according to Claim 1, **characterized in that** the clutch sleeve (30) is actuated directly by electromagnets (32) driven by a transmission control unit.

3. The traction device according to any one of the preceding claims, **characterized in that** the transmission (31) includes a differential (40) arranged along the axis of the electric machine (10), the shaft (20) of which comprises a longitudinal cavity traversed by a wheel shaft entrained by this differential.

4. The traction device according to Claim 1 or 2, **characterized in that** the transmission (31) comprises a differential (40), the axis of which is laterally offset with respect to the shaft (2) of the electric machine (10).

5. Method of controlling a hybrid vehicle comprising an electric traction device according to any one of the preceding claims, **characterized in that** starting from the speed of the vehicle corresponding to the maximum rotation speed of the electric machine (10), the transmission (11, 31) passes systematically to neutral.

## Patentansprüche

1. Elektrische Antriebsvorrichtung für Hybridfahrzeug, die einen Verbrennungsmotor aufweist, der Antriebsräder über ein erstes Schaltgetriebe antreibt, wobei diese elektrische Antriebsvorrichtung eine Elektromaschine (10) aufweist, die die Räder des Fahrzeugs (18) über ein zweites Schaltgetriebe (11, 31), das von dem ersten unabhängig ist, gemäß einem einzigen Untersetzungsverhältnis antreibt, bei dem das zweite Schaltgetriebe (11, 31) eine Abkuppelvorrichtung des Antriebs aufweist, deren Untersetzungsverhältnis derart ist, dass die maximal zulässige Drehzahl der Elektromaschine einer Geschwindigkeit von weniger als zwei Dritteln der maximalen Geschwindigkeit des Fahrzeugs entspricht, wobei die Synchronisation der Drehzahl der Elektromaschine (10) vor dem Einrücken des Untersetzungsverhältnisses durch eine elektrische Steuerung der Drehzahl dieser Maschine verwirklicht wird, ohne eine Synchronisationsvorrichtung durch Reibung zu verwenden, **dadurch gekennzeichnet, dass** das Untersetzungsverhältnis durch axiales Gleiten einer Klauenkupplungsmuffe (9, 30) eingerückt wird, die ein in Drehung freies Ritzel (5, 26) mit einer zweiten Welle (8, 22), die dieses trägt, fest verbindet, wobei das freie Ritzel einen Eingriff mit einem Ritzel (4, 24) bildet, das auf einer ersten parallelen Welle (2, 20) befestigt ist, und dass die erste Welle (2, 20) entlang der Achse der Elektromaschine (10) angeordnet ist, wobei die zweite Welle (8, 22) ein Ausgangsritzel (42) aufweist, das in einem Kranz (12), der an dem Differenzialgehäuse (14, 40) befestigt ist, eingreift.

2. Antriebsvorrichtung nach Anspruch 1, **dadurch gekennzeichnet, dass** die Klauenkupplungsmuffe (30) direkt von Elektromagneten (32), die von einem Steuerrechner des Schaltgetriebes gesteuert werden, betätigt wird.

3. Antriebsvorrichtung nach einem der vorhergehenden Ansprüche, **dadurch gekennzeichnet, dass** das Schaltgetriebe (31) ein Differenzial (40) aufweist, das entlang der Achse der Elektromaschine (10) angeordnet ist, deren Welle (20) eine Längsvertiefung aufweist, die von einer Radwelle, die von diesem Differenzial angetrieben wird, durchquert wird.

4. Antriebsvorrichtung nach Anspruch 1 oder 2, **dadurch gekennzeichnet, dass** das Schaltgetriebe (31) ein Differenzial (40) aufweist, dessen Achse seitlich in Bezug zu der Welle (2) der Elektromaschine (10) verlagert ist.

5. Verfahren zum Steuern eines Hybridfahrzeugs, das eine elektrische Antriebsvorrichtung nach einem der vorhergehenden Ansprüche aufweist, **dadurch gekennzeichnet, dass** ausgehend von der Geschwindigkeit des Fahrzeugs, die der maximalen Drehzahl der Elektromaschine (10) entspricht, das Schaltgetriebe (11, 31) systematisch auf den Leerlauf übergeht.
